# EUROPÄISCHE PATENTSCHRIFT

(11) **EP 0 452 556 B1**
(45) Veröffentlichungstag und Bekanntmachung des Hinweises auf die Patenterteilung: **02.03.1994**
(21) Anmeldenummer: 90124402.0
(22) Anmeldetag: 17.12.1990
(51) Int. Cl.: B62D 5/04

(54) **Messwertaufnehmer für eine elektromotorisch angetriebene Servolenkung**
Sensor for an electric motor-driven steering wheel
Capteur pour une direction assistée entraînée par moteur électrique

(30) Priorität: 19.04.1990 DE 4012480
(43) Veröffentlichungstag der Anmeldung: 23.10.1991
(73) Patentinhaber: ALFRED TEVES GmbH, 60441 Frankfurt (DE)
(72) Erfinder: Henein, Nabil, W-6100 Darmstadt (DE); Balz, Jürgen, W-6200 Wiesbaden (DE); Beer, Wilhelm, W-6090 Rüsselsheim 7 (DE)
(74) Vertreter: Portwich, Peter

(56) Entgegenhaltungen:
- DE-A- 3 304 917
- US-A- 4 645 024
- US-A- 4 660 671

## Beschreibung

Die Erfindung bezieht sich auf einen Meßwertaufnehmer für eine elektromotorisch angetriebene Kraftfahrzeug-Servolenkung, die ein Lenkgehäuse besitzt, in dem sich ein Weggenerator mit einer koaxial zu einem Drehstab auf einem Rotor angeordneten Hülse befindet, die proportional zu dem auftretenden Lenk-Drehmoment axial verschiebbar ist.

Aus der DE-OS 36 17 772 C2 ist eine solche elektrische Servolenkung bekannt, die ein aufwendiges Meßsystem aufweist. Der vorliegenden Erfindung liegt daher die Aufgabe zugrunde, einen vergleichsweise einfachen, preiswerten und kompakten Meßwertaufnehmer zu schaffen, mit dem zuverlässig der Lenkwinkel, die Lenkgeschwindigkeit und ableitbare Größen, wie die Lenkbeschleunigung etc. bestimmt werden können.

Es hat sich nun herausgestellt, daß diese Aufgabe mit dem im Anspruch 1 beschriebenen Meßwertaufnehmer gelöst werden kann. Weitere wichtige, vorteilhafte Ausführungsarten eines solchen Meßwertaufnehmers sind in den Unteransprüchen definiert.

Weitere Merkmale, Vorteile und Anwendungsmöglichkeiten der Erfindung gehen aus der folgenden Beschreibung anhand der beigefügten Abbildungen eines Ausführungsbeispiels der Erfindung hervor.

Es zeigen
- Fig. 1: im Längsschnitt den Teil eines Lenkgehäuses, in den ein Meßwertaufnehmer nach der Erfindung eingefügt ist, und
- Fig. 2: den Meßwertaufnehmer nach Fig. 1 in vergrößerter Darstellung.

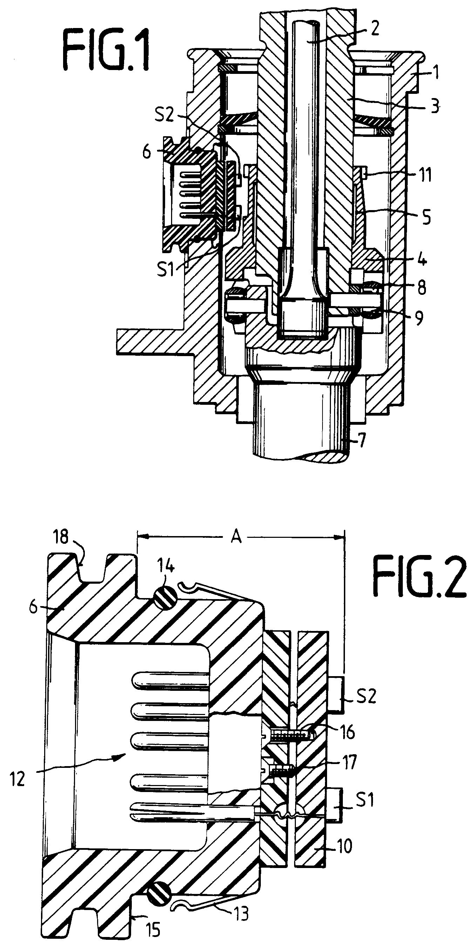

In Fig. 1 ist ein Lenkgehäuse 1 für eine Servolenkung mit - nicht dargestelltem - elektromotorischem Antrieb wiedergegeben. In dieses Lenkgehäuse hinein ragt der Drehstab 2 dieses Lenksystems, auf den in bekannter Weise die Drehbewegung eines Lenkrades übertragen wird. Der Drehstab 2 sitzt in einem koaxial angeordneten Rotor, auf den ebenfalls die Drehbewegung des Lenkrades übertragen wird, der dabei allerdings in Abhängigkeit von dem aufgebrachten Lenk-Drehmoment relativ zu dem Rotor 3 verdreht wird. Diese relative Drehbewegung zwischen dem Drehstab 2 und dem Rotor 3 wird mit Hilfe eines Weggenerators in eine axiale Verschiebung umgesetzt. Dieser Weggenerator besteht im wesentlichen aus einer Hülse 4, die in bekannter Weise mit Hilfe einer schrägen Kante, wie in Fig. 1 angedeutet ist, bei einer Relativ-Drehbewegung zwischen dem Rotor 3 und dem Drehstab 2 axial verschoben wird. Mit Hilfe einer Steuerkante oder eines Kegels 5 wird bei dieser axialen Verschiebung ein Signal in einem Halbleiter-Sensorelement S2, das an einem einsteckbaren Sensorträger 6 angebracht ist, hervorgerufen.

Die beim Lenken des Fahrzeugs hervorgerufene Drehbewegung des Drehstabs 2 wird in dem in Fig. 1 dargestellten Ausführungsbeispiel in bekannter Weise über ein nur teilweise dargestelltes Lenkritzel 7 weitergeleitet. Der Rotor 3 und das Lenkritzel bzw. die zu diesem Lenkritzel führende Welle sind hier über ein Nadellager 8 mit einem Lagergehäuse 9 verbunden.

Erfindungswesentlich ist die Anordnung und Ausbildung des Meßwertaufnehmers, nämlich des Sensorträgers 6 mit den Halbleiter-Sensorelementen S1 und S2. Es handelt sich bei diesen Sensorelementen beispielsweise um Feldplatten oder um Hall-Generatoren. In dem dargestellten Ausführungsbeispiel dient das Sensorelement S2 in Verbindung mit einem auf der Hülse 4 oder auf dem Rotor 3 angeordneten Zahnkranz 11, der sich synchron mit dem Drehstab 2 dreht, zur Messung des Lenk-Drehwinkels, der Drehrichtung, der Lenkgeschwindigkeit und - daraus ableitbar - der Lenkbeschleunigung. Das Sensorelement S1 erzeugt ein von der axialen Verschiebung der Hülse 4 und damit von dem aufgebrachten Lenk-Drehmoment abhängiges Signal. Über nicht dargestellte oder nur angedeutete Leitungen im Inneren des Meßwertaufnehmers sind die Halbleiter-Sensorelemente S1 und S2 mit Steckkontakten 12 verbunden, über die die elektrischen Meßsignale zur Auswertung weitergeleitet werden. Anstelle dieser Steckeranordnung bzw. dieser Steckkontakte 12 kann auch ein Kabel angeschlossen sein.

Die Halbleiter-Sensorelemente S1, S2 sind zweckmäßigerweise doppelt vorhanden, damit zur Überwachung des Systems redundante Signale erzeugt und über Kontakte zur Auswertung weitergleitet werden können.

Der Meßwertaufnehmer, der komplett in Fig. 2 wiedergegeben ist, wird mit Hilfe einer Schnellkupplung in der entsprechenden Öffnung des Lenkgehäuses 1 befestigt. Als Schnellkupplung dient im dargestellten Ausführungsbeispiel eine Anordnung mit mehreren Stahlrastfedern 13, die nach dem Einschieben des Sensorträgers 6 in das Lenkgehäuse 1 diesen Träger an seinem Platz arretieren. Bei Bedarf kann der Sensorträger ohne Werkzeug wieder herausgezogen werden. Eine umlaufende Dichtung 14 trennt das Innere des Lenkgehäuses 1 von der Außenfläche.

Die Sensorelemente S1 und S2 werden vor dem Einsetzen des erfindungsgemäßen Meßwertaufnehmers justiert. Hierzu ist eine Anschlagkante 15 am Sensorträger 6 vorgesehen, die als Bezugspunkt für das Maß A dient, das die Lage bzw. Tiefe der Sensoren S1,S2 im Inneren des Lenkgehäuses 1 definiert. Zur Einstellung dieses Maßes oder Abstandes A ist die Trägerplatte 10, auf der die Sensorelemente S1,S2 sitzen, mit Hilfe von Justier- und Befestigungsschrauben 16,17 an dem Sensorträger 6 befestigt.

Eine umlaufende Einkerbung 18 an der Außenseite des Sensorträgers 6 dient zur Arretierung eines nicht gezeigten Gegensteckers, der die Kontakte 12 aufnimmt und eine Verbindung zur ebenfalls nicht gezeigten Elektronik herstellt.

Wie aus der vorangegangenen Beschreibung hervorgeht, zeichnet sich der erfindungsgemäße Meßwertaufnehmer unter anderem durch einen besonders kompakten Aufbau aus. Es können auf sehr kleinem Raum mehrere, z.B. zwei oder vier Sensorelemente, die zu verschiedenen Sensorsystemen gehören können, untergebracht werden. Die Montage und Demontage des extern montierten, vollständig fertiggestellten und justierten Meßwertaufnehmers ist extrem einfach. Die eigentlichen Sensorelemente S1,S2 können zum Schutz in Kunststoff eingebettet werden. Die Öffnung des Lenkgehäuses wird durch den erfindungsgemäßen Sensorträger vollständig verschlossen.

## Patentansprüche

1. Meßwertaufnehmer für eine elektromotorisch angetriebene Kraftfahrzeug-Servolenkung, die ein Lenkgehäuse (1) besitzt, in dem sich ein Weggenerator mit einer koaxial zu einem Drehstab (2) auf einem Rotor (3) angeordneten Hülse (4) befindet, die proportional zu dem auftretenden Lenk-Drehmoment axial verschiebbar ist, dadurch **gekennzeichnet**, daß dieser in Form eines in eine Öffnung des Lenkgehäuses (1) eingepaßten, durch eine Schnellkupplung (13) arretierbaren Sensorträgers (6) ausgebildet ist, auf dessen in das Innere des Lenkgehäuses (1) zu der Hülse (4) gerichteten Oberfläche Halbleiter-Sensorelemente (S1,S2) angeordnet sind und dessen nach außen gerichtete Seite mit Steckkontakten (12) zum Anschluß der Halbleiter-Sensorelemente (S1,S2) an eine Auswerteelektronik versehen ist.

2. Meßwertaufnehmer nach Anspruch 1, dadurch **gekennzeichnet**, daß die Halbleiter-Sensorelemente (S1,S2) zur Messung des Drehwinkels sowie der Drehrichtung des Drehstabes (2) und/oder zur Messung des Lenk-Drehmomentes ausgebildet sind.

3. Meßwertaufnehmer nach Anspruch 2, dadurch **gekennzeichnet**, daß die Halbleiter-Sensorelemente (S2) zur Messung des Drehwinkels die Drehbewegung eines auf dem Rotor (2) angebrachten Impulsgeber-Zahnkranzes (11) ermitteln.

4. Meßwertaufnehmer nach Anspruch 2, dadurch **gekennzeichnet**, daß die Halbleiter-Sensorelemente (S1) zur Messung des Lenk-Drehmomentes die axiale Verschiebung der Hülse (4) ermitteln.

5. Meßwertaufnehmer nach einem oder mehreren der Ansprüche 1 bis 4, dadurch **gekennzeichnet**, daß die Halbleiter-Sensorelemente (S1,S2) in mehrfacher Ausführung zur redundanten Messung des Drehwinkels sowie der Drehrichtung und/oder der axialen Verschiebung der Hülse vorhanden sind.

6. Meßwertaufnehmer nach einem oder mehreren der Ansprüche 1 bis 5, dadurch **gekennzeichnet**, daß als Halbleiter-Sensorelemente (S1,S2) Feldplatten oder Hall-Generatoren vorgesehen sind.

7. Meßwertaufnehmer nach einem oder mehreren der Ansprüche 1 bis 6, dadurch **gekennzeichnet**, daß anstelle der Steckkontakte (12) ein mehradriges Anschlußkabel vorgesehen ist.

8. Meßwertaufnehmer nach einem oder mehreren der Ansprüche 1 bis 7, dadurch **gekennzeichnet**, daß der Sensorträger (6) in die Öffnung des Lenkgehäuses einsteckbar ist und daß als Schnellkupplung an den Sensorträger (6) Stahlrastfedern (13) angefügt sind, die beim Einstecken des Sensorträgers (6) am Lenkgehäuse (1) einrasten.

9. Meßwertaufnehmer nach einem oder mehreren der Ansprüche 1 bis 8, dadurch **gekennzeichnet**, daß die Halbleiter-Sensorelemente (S1,S2) justierbar in Einsteckrichtung auf einer Trägerplatte (10) aufgebracht sind und daß der einsteckbare Sensorträger (6) eine Anschlagkante (15) besitzt, die die Einbautiefe festlegt.

## Claims

1. A transducer for an electromotively driven automotive vehicle power steering system comprising a steering housing (1) in which a travel generator is accommodated having a sleeve (4) which is arranged on a rotor (3) coaxially to a torsion bar (2), the said sleeve being axially displaceable proportionally to the occurring steering torque,
**characterised** in that the said transducer is designed as a sensor carrier (6) which is fitted into an opening of the steering housing (1) and is lockable by a quick-connect (13), with semiconductor sensor elements (S1, S2) being arranged on the surface of said sensor carrier that is directed to the interior of the steering housing (1) towards the sleeve (4), while said's outwardly directed side is provided with plug contacts (12) for connecting the semiconductor sensor elements (S1, S2) to an analyzing electronics.

2. A transducer as claimed in claim 1,
**characterised** in that the semiconductor sensor elements (S1, S2) are designed for measuring the angle of rotation as well as the direction of rotation of the torsion rod (2) and/or for measuring the steering torque.

3. A transducer as claimed in claim 2,
**characterised** in that the semiconductor sensor elements (S2) for measuring the angle of rotation determine the rotary motion of a pulse-generator toothed rim (11) fitted to the rotor (2).

4. A transducer as claimed in claim 2,
**characterised** in that the semiconductor sensor elements (S1) determine the axial displacing motion of the sleeve (4) for measuring the steering torque.

5. A transducer as claimed in any one or more of the claims 1 to 4,
**characterised** in that the semiconductor sensor elements (S1, S2) are available several times for the redundant measurement of the angle of rotation as well as the direction of rotation and/or the axial displacing motion of the sleeve.

6. A transducer as claimed in any one or more of the claims 1 to 5,
**characterised** in that magneto resistors or Hall generators are provided as semiconductor sensor elements (S1, S2).

7. A transducer as claimed in any one or more of the claims 1 to 6,
**characterised** in that a multi-wire connecting cord is provided instead of the plug contacts (12).

8. A transducer as claimed in any one or more of the claims 1 to 7,
**characterised** in that the sensor carrier (6) can be inserted into the opening of the steering housing, and in that in the capacity of a quick-connect steel stop springs (13) are attached to the sensor carrier (6), which catch on the steering housing (1) when the sensor carrier (6) is inserted thereinto.

9. A transducer as claimed in any one or more of the claims 1 to 8,
**characterised** in that the semiconductor sensor elements (S1, S2) are adjustably mounted on a carrier plate (10) in the direction of insertion, and in that the insertable sensor carrier (6) comprises a stop edge (15) which determines the mounting depth.

## Revendications

1. Transducteur pour direction assistée de véhicule automobile entraînée par moteur électrique, cette direction comportant un boîtier de direction (1) dans lequel est situé un générateur de course comportant un manchon (4) qui est disposé sur un rotor (3) suivant le même axe qu'une barre de torsion (2) et qui est agencé de façon à pouvoir se déplacer en translation axiale d'une manière proportionnelle au couple de direction appliqué, caractérisé en ce qu'il est réalisé sous la forme d'un porte-capteur (6) qui est emboîté dans une ouverture du boîtier de direction (1) et est agencé de façon à pouvoir être immobilisé au moyen d'un accouplement rapide (13), des éléments de capteur à semiconducteurs (S1, S2) étant disposés sur la surface de ce porte-capteur (6) qui est tournée, à l'intérieur du boîtier de direction (1), du côté du manchon (4), tandis que la face de ce porte-capteur (6) qui est tournée vers l'extérieur est pourvue de fiches mâles (12) servant au raccordement des éléments de capteur à semiconducteurs (S1, S2) à un circuit électronique d'exploitation.

2. Transducteur suivant la revendication 1, caractérisé en ce que les éléments de capteur à semiconducteurs (S1, S2) sont agencés pour la mesure de l'angle de rotation, ainsi que du sens de rotation de la barre de torsion (2) et/ou pour la mesure du couple de direction.

3. Transducteur suivant la revendication 2, caractérisé en ce que les éléments de capteur à semiconducteurs (S2) servant à la mesure de l'angle de rotation déterminent le déplacement en rotation d'une couronne dentée (11) génératrice d'impulsions qui est montée sur le rotor (2).

4. Transducteur suivant la revendication 2, caractérisé en ce que les éléments de capteur à semiconducteurs (S1) servant à la mesure du couple de direction déterminent le déplacement en translation axiale du manchon (4).

5. Transducteur suivant une ou plusieurs des revendications 1 à 4, caractérisé en ce que les éléments de capteur à semiconducteurs (S1, S2) sont prévus en plusieurs exemplaires en vue d'une mesure redondante de l'angle de rotation, ainsi que du sens de rotation et/ou du déplacement en translation axiale du manchon.

6. Transducteur suivant une ou plusieurs des revendications 1 à 5, caractérisé en ce que, comme éléments de capteur à semiconducteurs (S1, S2), il est prévu des magnétorésistances ou des générateurs Hall.

7. Transducteur suivant une ou plusieurs des revendications 1 à 6, caractérisé en ce qu'à la place des fiches mâles, il est prévu un câble de raccordement à plusieurs conducteurs.

8. Transducteur suivant une ou plusieurs des revendications 1 à 7, caractérisé en ce que le porte-capteur (6) est agencé de façon à pouvoir être emboîté dans l'ouverture du boîtier de direction et en ce que, comme accouplement rapide, il est adjoint au porte-capteur (6) des ressorts d'enclenchement (13) en acier qui s'enclenchent lors de l'emboîtement du porte-capteur (6) sur le boîtier de direction (1).

9. Transducteur suivant une ou plusieurs des revendications 1 à 8, caractérisé en ce que les éléments de capteur à semiconducteurs (S1, S2) sont montés sur une plaque de support (10) de façon à pouvoir être ajustés suivant la direction d'emboîtement et en ce que le porte-capteur (6) emboîtable comporte un bord de butée (15) qui détermine la profondeur de montage.
